# NEUE EUROPÄISCHE PATENTSCHRIFT

(11) **EP 2 705 738 B2**
(45) Veröffentlichungstag und Bekanntmachung des Hinweises auf die Entscheidung über den Einspruch: **28.11.2018**
(45) Hinweis auf die Patenterteilung: 14.10.2015
(21) Anmeldenummer: 13401091.7
(22) Anmeldetag: 23.08.2013
(51) Int. Cl.: A01B 3/42, A01B 15/14

(54) **Drehpflug**
Reversible plough
Charrue brabant

(30) Priorität: 05.09.2012 DE 102012108233
(43) Veröffentlichungstag der Anmeldung: 12.03.2014
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)
(74) Vertreter: Grünecker Patent- und Rechtsanwälte PartG mbB

(56) Entgegenhaltungen:
- EP-A1- 0 171 861
- EP-A1- 0 532 492
- EP-A1- 2 014 145
- US-A- 3 303 891

## Beschreibung

Die Erfindung bezieht sich auf einen Drehpflug mit einem an einem Anbaubock zur Verbindung des Drehpfluges mit einem landwirtschaftlichen Zugfahrzeug drehund/oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und wobei Pflugkörper, Stützräder und dgl. Pflugfunktionsteile über Halterungen an dem Pflugrahmen befestigt sind.

Drehpflüge mit an gegenüberliegenden Seiten eines Pflugrahmens angeordneten Pflugscharreihen haben Pflugscharreihen, die auf der einer Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders, ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Üblicherweise sind die Halterungen für Pflugkörper, Stützräder und dgl. an der Unter- und an der Oberseite des Pflugrahmens des Drehpfluges befestigt. Ein Beispiel dazu ist der aus der DE 197 18 988 A1 bekannte Pflug, bei dem die Pflugkörper über Klemmplatten am Pflugrahmen festzulegen sind. Die Klemmplatten bedecken dabei mit einander zugewandten Schenkeln die Oberund Unterseite des Pflugrahmens und haben nach oben und unten gerichtete Befestigungsansätze, die über Schrauben und Muttern miteinander zu verspannen sind. Dadurch werden die Klemmkräfte auf den Pflugrahmen übertragen. Die abgewinkelten Schenkel mit ihren empor bzw. während der Arbeitsstellung des Pfluges zur Bodenoberfläche hin gerichteten Befestigungsansätzen sowie die Klemmschrauben beeinträchtigen den Raum oberhalb und unterhalb des Pflugrahmens während des Arbeitseinsatzes erheblich. Das gleiche gilt auch für Halterungen anderer Funktionsteile einschließlich von Leitungen wie Hydraulikleitungen von Funktionsteilen. Ein derartiger Pflug neigt daher zu Verstopfungen, die durch diese Pflugkörperhalterungen ausgelöst werden können.

Die EP 0 171 861 A1 zeigt einen Drehpflug mit einem langestreckten Pflugbalken. Die längs des Pflugbalkens verlaufenden Enden des Pflugbalkens sind für die Anordnung der Funktionsteile mittels Schrauben zur Schaffung von Befestigungsbereichen jeweils nach oben und unten abgekantet. Außerdem überragen die Funktionsteile und deren Befestigungsbereiche die oberen und unteren Flächen des Pflugbalkens. Hierdurch wird in nachteiliger Weise durch die Befestigungsbereiche der Funktionsteile mittels der Schrauben und der umgekanteten Befestigungsbereiche für die Schrauben der freie Durchgang zwischen dem Pflugrahmen und der Bodenoberfläche verringert. Somit besteht hier eine erhebliche Verstopfungsgefahr.

Die EP 0 532 492 A1 zeigt einen Drehpflug mit einem langestreckten Pflugbalken, an dem Funktionsteile befestigt sind. Mit welcher Befestigungsart die Funktionsteile an dem Pflugbalken befestigt sind, ist diesem Dokument nicht zu entnehmen.

Es ist Aufgabe der vorliegenden Erfindung, einen Drehpflug der eingangs genannten derart weiter zu bilden, dass die Verstopfungsgefahr am Pflugrahmen verringert ist.

Zur Lösung dieser Aufgabe zeichnet sich der Drehpflug der eingangs genannten Art dadurch aus, dass die Halterungen von Funktionsteilen des Pflugrahmens nur an einer Seitenwand oder an zwei Seitenwänden des Pflugrahmens, also bei einem üblichen Vierkantpflugrahmen an den beiden Seitenwänden, befestigt sind und die an Seitenwände(n) des Pflugrahmens in der Arbeitsstellung des Pfluges angrenzenden zum Erdboden hinweisende und vom Erdboden wegweisende Wandungsbereiche des Pflugrahmens frei von Halterungen von Funktionsteilen ausgebildet sind. Damit kann der Pflugrahmen in seiner Arbeitsstellung in seinen Bereichen oberhalb seiner oberen Wandung und unterhalb seiner unteren Wandung frei von Befestigungen und Befestigungsansätzen von Halterungen von Funktionsteilen und Leitungen gehalten werden, womit ein Verstopfungs- und ein Verschmutzungsrisiko erheblich vermindert wird.

Weiterhin wird die Halterung mit der einen Seitenwand oder mit zwei Seitenwänden des Pflugrahmens verschraubt. Letzteres kann dergestalt erfolgen, dass zumindest eine Schraube oder dgl. Befestigungsmittel den Pflugrahmen durchsetzt, so dass die Halterung an beiden Seitenwänden des Pflugrahmens angeschlossen ist, ohne dass sich die Halterung in Bereichen oberhalb oder unterhalb des Pflugrahmens an dortige Wandungsteile anlegt.

Besonders bevorzugt wird, wenn die Halterung zumindest ein Ansatzelement aufweist, das formschlüssig in eine komplementär ausgebildete Ausnehmung des Pflugrahmens eingreift. Alternativ kann ein derartiges Ansatzelement auch am Pflugrahmen vorgesehen sein, das in eine entsprechend komplementär ausgebildete Ausnehmung der Halterung eingreift. Es ist ebenfalls möglich, zwei oder mehr Ansatzelemente an der Halterung vorzusehen bzw. umgekehrt am Pflugrahmen, die in entsprechende Ausnehmungen eingreifen. Durch dieses Ansatzelement ist zunächst die Halterung am Pflugrahmen zu zentrieren, und kann dann über weitere Befestigungselemente, beispielsweise über weitere Schrauben mit dem Pflugrahmen sicher verbunden werden. Durch den Formschluss eines entsprechenden Ansatzelerhentes in der komplementär ausgebildeten Ausnehmung ergibt sich eine sichere und die Schraubverbindung entlastende Anordnung der Halterung an dem Pflugrahmen, die auch als Widerlager dient und mithin Stoßbelastungen sicher abfängt.

An der Halterung, insbesondere wenn sie seitlich an dem Pflugrahmen vorgesehen ist, kann sich in besonders vorteilhafter Weise auch eine Vorrichtung zur Einstellung der Pflugarbeitsbreite anschließen, und zwar dergestalt, dass der Pflugkörper um eine im wesentlichen lotrechte Achse schwenkbar am Pflugrahmen über einen eine Ausnehmung des Pflugrahmens durchsetzende Hebel verstellbar ist. Der die Ausnehmung des Pflugrahmens durchsetzende Hebel kann seinerseits beweglich mit zumindest einem Teil der Halterung, insbesondere der Pflugkörperhalterung verbunden sein. Dazu kann die Pflugkörperhalterung zwei- und mehrteilig ausgebildet sein, beispielsweise mit einem Pflugkörperhalteteil, das - wie vor erwähnt - seitlich an dem Pflugrahmen mit Schrauben und einem formschlüssig in eine Ausnehmung angreifenden Ansatz befestigt ist. An diesem Pflugkörperhalteteil können z.B. Konsolen befestigt werden, zwischen denen eine lotrechte Achse definiert ist, so dass die Konsolen, an denen ein Pflugkörper zu befestigen ist, relativ zu dem an dem Pflugrahmen befestigten Pflugkörperhalteteil bewegt werden können. Das seitlich an den Pflugrahmen angebundene Pflugrahmenhalteteil kann seinerseits eine Ausnehmung, beispielsweise eine schlitzförmige Ausnehmung haben, die zu der Ausnehmung, im Pflugrahmen fluchtet, so dass der Hebel zur Verstellung der Arbeitsbreite nicht nur den Pflugrahmen sondern auch das Pflugrahmenhalteteil durchsetzen kann.

Durch die bewegliche Verbindung des Hebels mit der Pflugkörperhalterung, insbesondere durch die schwenkbewegliche Verbindung und die Verschwenkbarkeit um eine im wesentlichen horitzontale Achse, können weiterhin wirksam Stöße aufgefangen werden, um die Verschleißanfälligkeit des Pfluges weiter zu vermindern.

Weiterhin ist vorgesehen, dass die Halterung ein Stützrad des Pfluges trägt.

Weitere Vorteile und Ausgestaltungen der Erfindung ergeben sich aus weiteren Unteransprüchen, der nachstehenden Beschreibung und der Zeichnung. In der Zeichnung zeigen:
- Fig. 1: eine schematische Seitenansicht auf ein Ausführungsbeispiel eines Drehpfluges nach der Erfindung;
- Fig. 2: ausschnittsweise in perspektivischer Darstellung einen Teilbereich des Pflugrahmens mit angedeuteter Pflugschar;
- Fig. 3: eine zu Fig. 2 analoge Darstellung aus einer anderen mehr von oben ausgerichteten Perspektive;
- Fig. 4: ein Teilausschnitt einer perspektivischen Darstellung auf den Pflugrahmen mit Pflugkörperhalterung (ohne Pflugschar);
- Fig. 5: eine perspektivische Darstellung schräg von oben auf das Ausführungsbeispiel nach Fig. 4 mit angedeutetem Pflugschar;
- Fig. 6: eine zu Fig. 5 analoge Darstellung,
- Fig. 7: eine Darstellung eines Teilbereich des Pflugrahmens in einer Ansicht schräg von oben;
- Fig. 8: eine Seitenansicht auf die Pflugkörperhalterung von der dem Pflugschar abgewandten Seite;
- Fig. 9: einen Teilausschnitt einer perspektivischen Darstellung eines Ausführungsbeispieles auf einen Drehpflug im Bereich der Anbindung des Pflugrahmens an dem Anbaubock für die Verbindung mit einem landwirtschaftlichen Zugfahrzeug;
- Fig. 10: vergrößert den Bereich des seitlich am Pflugrahmen angebauten Halterungsteiles des Anbaubockes;
- Fig. 11: eine zu Fig. 10 analoge Darstellung des Anbauteiles des Ausführungsbeispiels nach den Fig. 9 und 10 vor der Montage;
- Fig. 12: eine zu Fig. 11 analoge Darstellung von der gegenüberliegenden Seite betrachtet vor der Montage an dem Pflugrahmen, und
- Fig. 13: ein Ausführungsbeispiel eines verstellbar ausgebildeten Ansatzelements des Halterungsteiles oder des Pflugkörperhalteteils, das in eine entsprechende Ausnehmung innerhalb des Pflugrahmens einzusetzen ist.

In der Zeichnung sind grundsätzlich übereinstimmende Teile mit übereinstimmenden Bezugsziffern versehen.

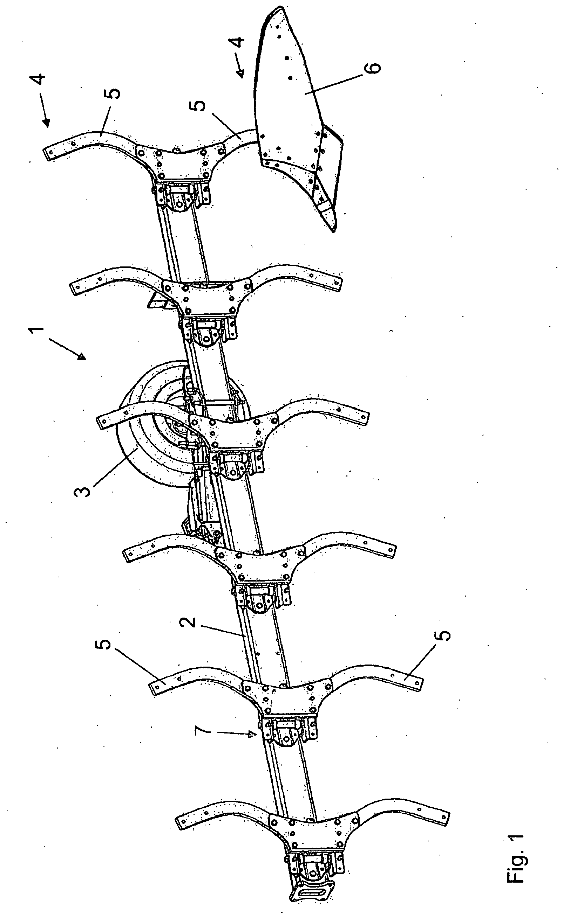

In Fig. 1 ist ein Ausführungsbeispiel eines allgemein mit 1 bezifferten Drehpfluges gezeigt, der über eine nicht im Einzelnen dargestellten Anbaubock an einen ebenfalls nicht im Einzelnen näher dargestellten landwirtschaftlichen Schlepper anhängbar ist und der einen Pflugrahmen 2 aufweist, der über ein Stützrad 3 auf dem Erdboden abzustützen ist. Der Pflugrahmen 2 trägt allgemein mit 4 bezifferte gegenüberliegende Pflugscharreihen mit an Pflugarmen 5 angeordneten Pflugkörpern 6, die gegenüberliegend an den Pflugrahmen 2 angeordnet sind. In dem Ausführungsbeispiel nach Fig. 1 ist nur ein Pflugkörper 6 angedeutet.

In der Darstellung nach Fig. 1 sind die unteren Pflugkörper 6 einer Pflugscharreihe 4 in der Arbeitsstellung. Durch eine Bewegung um 180° kann der Pflugrahmen 2 gedreht werden, so dass die gegenüberliegende Pflugscharreihe 4 mit daran montierten Pflugkörpern 6 in die Arbeitsstellung gelangen. Die dazu erforderlichen Teile wie Drehwelle, Zylindereinheiten sind aus Gründen der besseren Übersichtlichkeit nicht dargestellt.

Die Pflugkörper 6 und mithin die Pflugscharreihen 4 sind über die Pflugarme 5 an einer allgemein mit 7 bezifferten Pflugkörperhalterung an dem Pflugrahmen 2 befestigt. Wie im Einzelnen anhand weiterer Figuren noch dargestellt wird, ist die Pflugkörperhalterung 7 bei dem gezeigten Ausführungsbeispiel mehrteilig ausgebildet, und zwar dergestalt, dass sie den oberen Bereich des Pflugrahmens 2 genauso wie den unteren Bereich des Pflugrahmens 2 freilässt und sich nur an seitlichen in Fig. 1 dem Betrachter zugewandten Bereichen des Pflugrahmens 2 anschließt. Damit gehen im Alltagsbetrieb erhebliche Vorteile einher, da insbesondere die Pflugrahmenoberseite frei von Anbauten gestaltet ist mit erheblichen Vorteilen im rauen Alltagseinsatz.

Wie im Einzelnen noch näher erläutert werden wird, sind die Pflugarme 5 mit den Pflugkörpern 6 um eine lotrechte Achse verschwenkbar und auch hinsichtlich ihrer Arbeitsbreite zu verstellen. Dies wird anhand der weiteren Darstellungen näher erläutert werden.

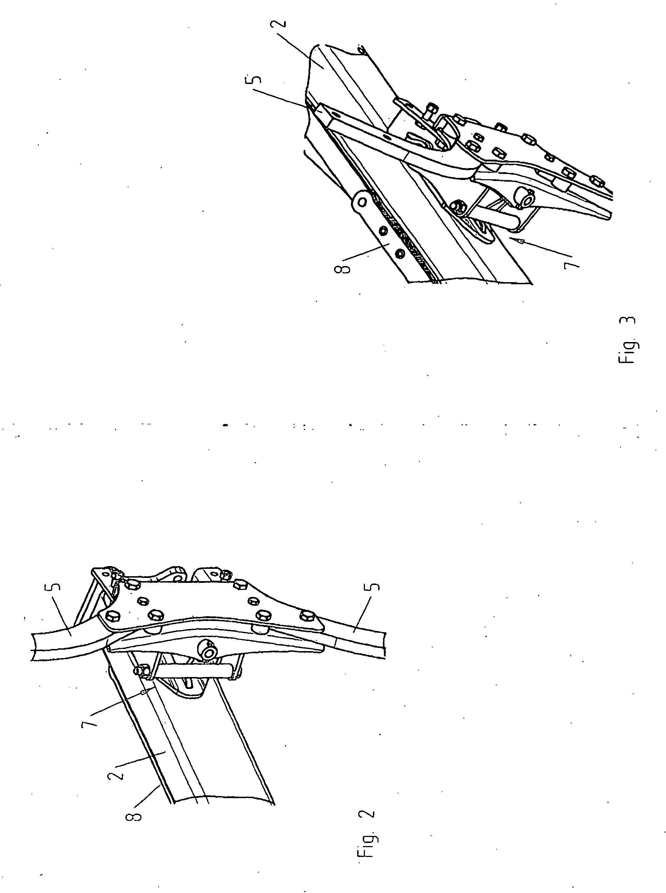

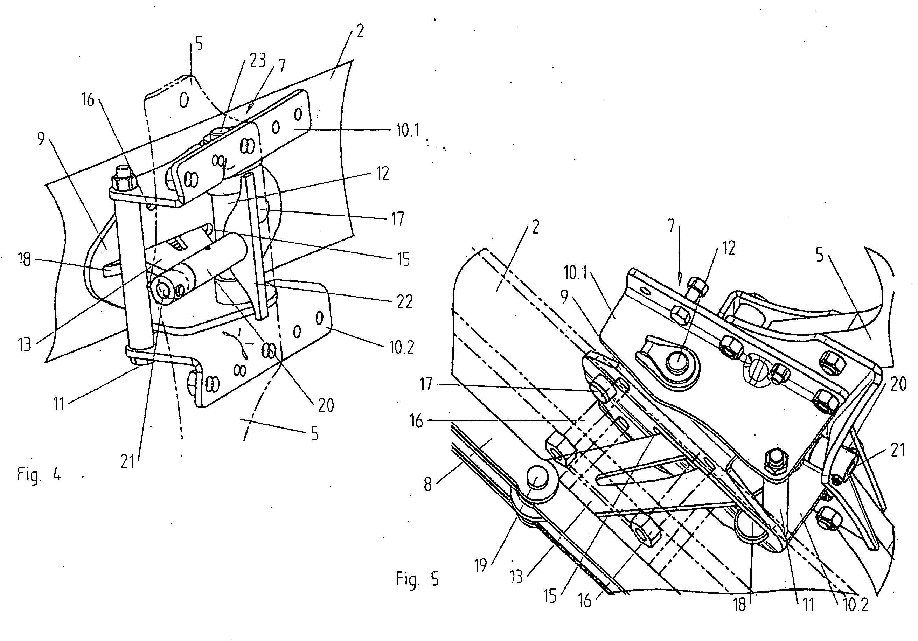

Wie die Fig. 2 und 3 zeigen, sind die Pflugkörper 6 und damit die Pflugscharreihen 4 und 5 über die Pflugkörperhalterung 7 an dem Pflugrahmen 2 befestigt. Fig. 3 zeigt, dass eine Verstellstange 8 seitlich neben dem Pflugrahmen 2 vorgesehen ist, um mithilfe von nicht gezeigten Stellzylindern die Arbeitsbreite des Pfluges 1 über eine Verstellung und damit um eine Verschwenkung der Pflugscharreihen 4 mit angeordneten Pflugkörpern 6 einzustellen. Die Pflugscharreihen bzw. die entsprechenden Halter 7 der Pflugkörper 6 sind über eine Befestigungsplatte mit der Pflugkörperhalterung 7 verschraubt. Die entsprechenden Teile sind näher aus den Fig. 4, 5 und 6 ersichtlich. Die Pflugkörperhalterung 7 besteht in dem dargestellten Ausführungsbeispiel aus mehreren Teilen, nämlich zunächst dem Pflugkörperhalteteil 9 und zwei mit Abstand zueinander angeordneten Konsolen 10.1 und 10.2, wobei 10.1 die obere Konsole und 10.2 die untere Konsole beziffert. Diese sind gegensinnig abgewinkelt, um dort über Schrauben, die in entsprechende Schraublöcher einzuführen sind, die Befestigungsplatte der Pflugarme 5 der Pflugschare 6 anzubinden. Die Konsolen 10.1 und 10.2 sind über eine Schraube 11 und über eine Bolzenhülsenbefestigung 12 miteinander verbunden. Die Bolzenhülsenbefestigung 12 definiert darüber hinaus eine lotrechte Achse, über die die Konsolen mit adaptierten Pflugscharen 4 und 5 relativ zu dem Pflugrahmen 2 zur Verstellung der Arbeitsbreite innerhalb eines vorgegebenen Schwenkweges zu verschwenken sind.

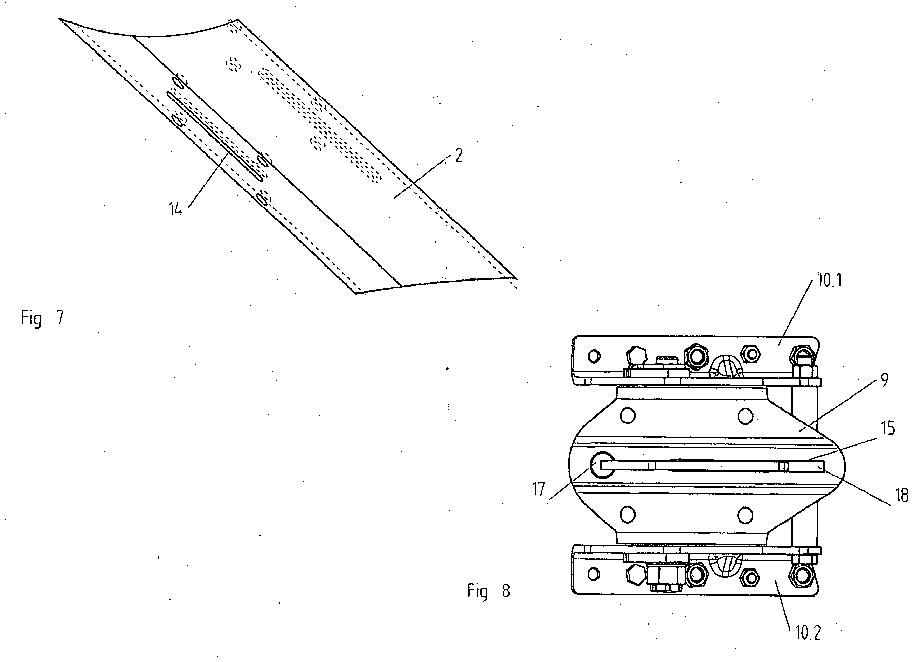

Dazu ist ein Hebel 13 vorgesehen, der eine Ausnehmung 14 (Fig. 7) durchsetzt. Des Weiteren ist in dem Pflugkörperhalteteil 9 ebenfalls eine Ausnehmung 15 vorgesehen, die von dem Hebel 13 ebenfalls durchsetzt ist. Wie aus Fig. 5 ersichtlich ist, ist der Hebel 13 gelenkig mit der Verstellstange 8 verbunden. Das Pflugkörperhalteteil 9 hat eine im Querschnitt im Wesentlichen U-förmige Gestalt und ist mit dem Pflugrahmenteil 2 verbunden, und zwar über Schrauben 16. Des Weiteren hat das Pflugkörperhalteteil 9 noch Vorsprünge 17 und 18, die in eine entsprechende Ausnehmung innerhalb des Pflugrahmens 2 und/oder die Ausnehmung 14 am Pflugrahmen 2 eingreifen, um ein Widerlager darzubieten, so dass das Pflugkörperhalteteil 9 nicht nur über die Schrauben 16 an dem Pflugrahmen 2 gesichert ist. Alternativ können auch am Pflugrahmen 2 entsprechende Vorsprünge vorgesehen sein, um in entsprechende Ausnehmungen am Pflugkörperhalteteil 9 einzugreifen.

In besonders vorteilhafter Weise ist der Hebel 13 beweglich mit der Bolzenhülseneinheit 2 und somit mit dem gegenüber den Pflugrahmen 2 verschwenkbaren Teil der Pflugkörperhalterung 7 verbunden, die durch die Konsolen 10.1 und 10.2 gebildet sind. Dazu ist der Hebel 13 an seiner der Gelenkstelle 19 an dem Verstellhebel 8 abgewandten Ende mit der im Wesentlichen horizontal ausgerichtete Achse 21 verbunden. Dieser Gelenkbolzen ist in einer Gelenkhülse angeordnet, die mit dem Bolzen/Hülsenteil 12 über einen Flansch 22 verbunden ist, so dass über den Hebel 13 die Verstellung der Konsolen 10.1 und 10.2 mitsamt der Gelenkbolzen-/Hülseneinheit 20 zu vollziehen ist, womit die Pflugscharreihen 4 und damit die Pflugarme 5 mit den die Pflugkörpern 6 zu verstellen sind.

Über die Achse 21 ist der Hebel 13 gegenüber der Pflugkörperhalterung 7 um die im Wesentlichen horizontal ausgerichtete Achse 23 beweglich und mithin auch gegenüber den die Pflugkörpern 6 tragenden Pflugarme 5. Gleichwohl ist der Hebel 13 innerhalb der Ausnehmung 14 bzw. der Ausnehmung 15 in dem Pflugkörperhalteteil 9 geführt, und zwar hinsichtlich der Anschläge, die sich links und rechts, bezogen auf die Darstellung nach Fig. 4 neben dem dargestellten Hebel 13 befinden, aber auch nach oben und unten, so dass die jeweilige Ausnehmung 14 am Pflugrahmen 2 bzw. die Ausnehmung 15 im Pflugkörperhalteteil 9 eine derartige Hocherstreckung hat, dass sich der Hebel 13 gegenüber der Pflugkörperhalterung 7 verschwenken und nach oben und unten bewegen lässt, jedoch nach einem bestimmten Schwenkweg nach oben und unten durch die jeweiligen Begrenzungswände der Ausnehmungen 14 und 15 auch wiederum Anschläge vorfindet, wodurch die Bewegung nach oben und unten hin begrenzt ist. So lassen sich Verspannungen in der beweglichen Verbindung zwischen dem Hebel 13 und der Pflugkörperhalterung 7 bzw. deren Teilen wirksam verhindern, was zu einem reparaturverminderten Betrieb des Drehpfluges führt.

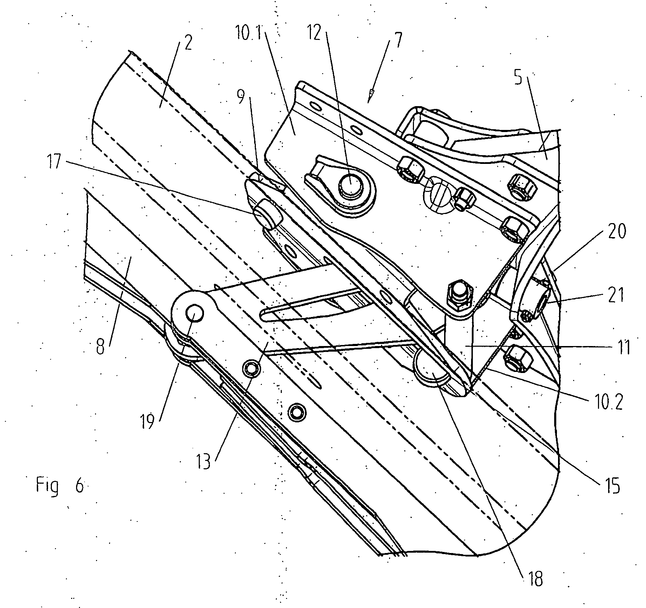

In den weiteren Darstellungen nach den Fig. 6, 7 und 8 sind die vorerwähnten Gestaltungsdetails in weiteren Ansichten noch näher dargestellt und mithin weiter verdeutlicht.

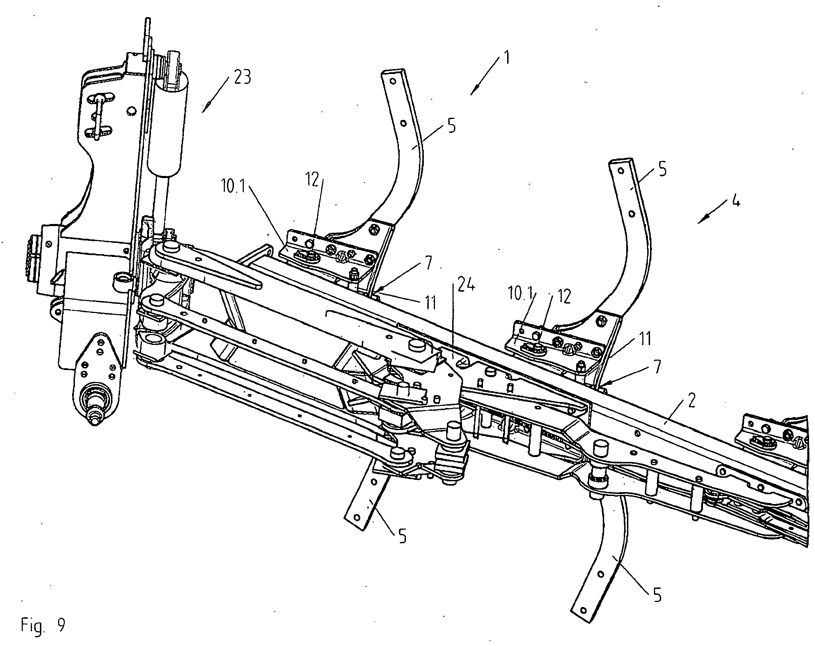

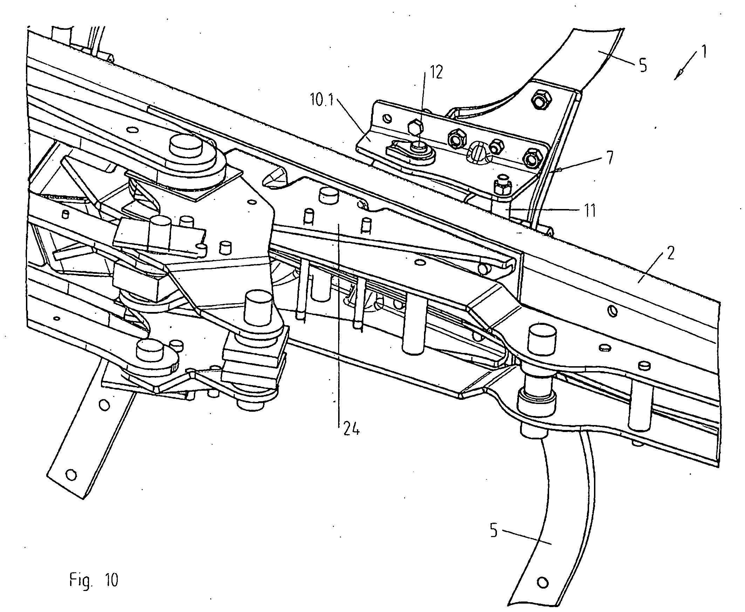

Neben den schon zuvor in den Figuren gezeigten Teilen der Pflugkörperhalterung 7 und der Pflugarme 5 der Pflugscharreihen 4 ist in den Fig. 9 bis 12 ein allgemein mit 23 bezifferter Anbaubock des Pfluges 1 gezeigt, der dazu dient, den Pflug 1 und damit den Pflugrahmen 2 mit einem landwirtschaftlichen Nutzfahrzeug, beispielsweise einem landwirtschaftlichen Schlepper, zu verbinden und dort z.B. einen Zapfwellenantrieb für die entsprechenden Dreh- und sonstigen Einstellungsbewegungen des Pfluges 1 anzubinden.

Der besseren Übersichtlichkeit wegen ist auf die nähere Gestaltung des Anbaubockes 23 an dieser Stelle verzichtet worden. Dieser soll jedoch technische Details aufweisen, die im Stand der Technik bekannt sind und mithin zahlreiche Vorbilder hat.

Wesentlich im Rahmen der vorliegenden Erfindung ist, dass dieser Anbaubock 23 ein Halterungsteil 24 hat, das auch wiederum an einer Seitenwandung des Pflugrahmens 2 angeflanscht ist, so dass die Ober- und Unterseite des als Vierkantrahmen ausgebildeten Pflugrahmens 2 frei von Anbauteilen auch von Verbindungsteilen des Pflugrahmens 2 ausgebildet ist. Da bereits die Pflughalterung 7 ebenfalls an einer Seitenwandung des Pflugrahmens 2 angebunden sind, ist somit insgesamt der Pflugrahmen 2 an seiner Ober- und an seiner Unterseite frei von jedweden Funktionsteilanbindungen, so dass etwaige dadurch bedingte und im Stand der Technik auftretende Verschmutzungen und Verstopfungsrisiken vermieden sind.

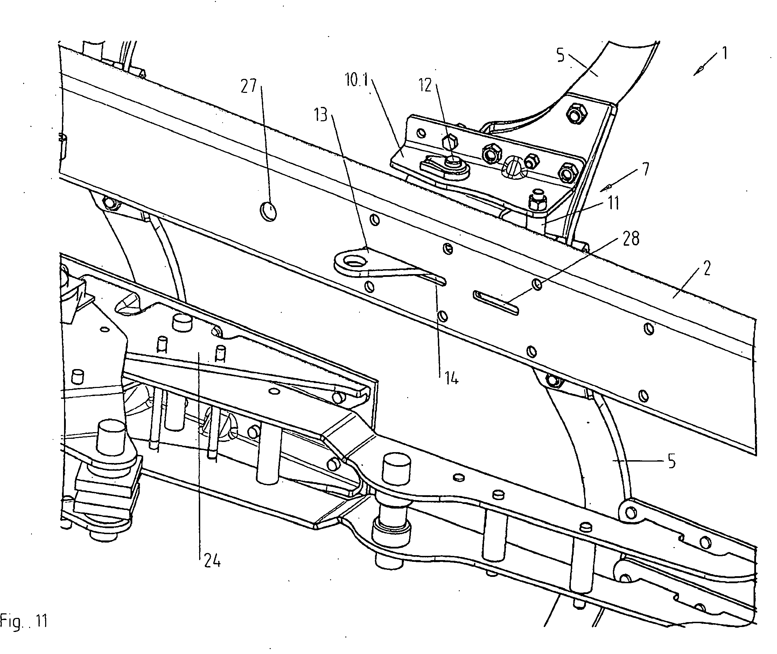

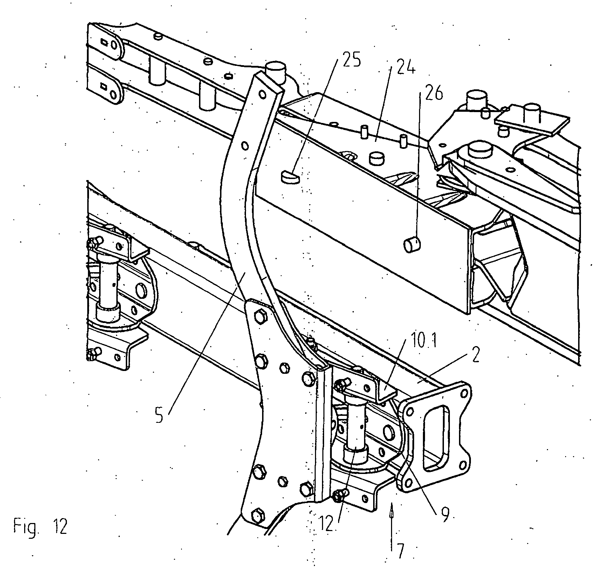

Das Halterungsteil 24 ist seinerseits mit einem oder mehreren Vorsprüngen bzw. Ansatzelementen 25 und 26 (Fig. 12) versehen, die in entsprechende Ausnehmungen 27 und 28 (Fig. 11) eingreifen können. Darüber hinaus ist das Halterungsteil 24 nach entsprechender Einführung der Vorsprünge 25 und 26 in die Ausnehmungen 27 und 28 am Pflugrahmen 28 über Schraubverbindungen oder dergleichen mit dem Pflugrahmen 2 verspannt. Durch die Ansatzelemente 25 und 26 lassen sich die entsprechenden Befestigungsverbindungen, also in aller Regel die Schraubverbindungen, wirksam entlasten.

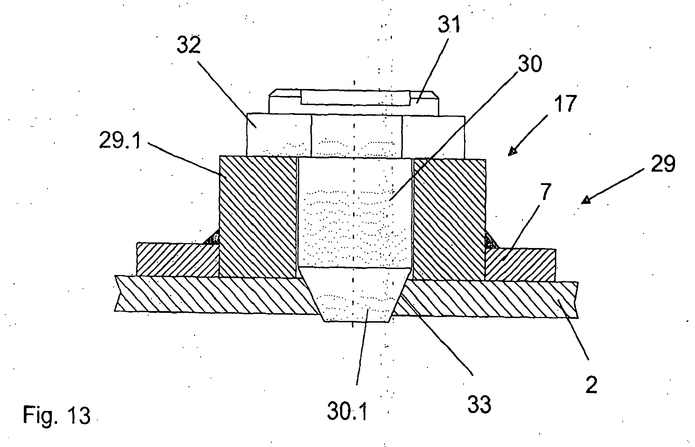

In Fig. 13 ist exemplarisch ein besonders gestaltetes Ansatzelement 29 gezeigt, das beispielsweise an dem Halterungsteil 24 oder aber auch an dem Pflugkörperhalteteil 27, vorgesehen sein kann. Exemplarisch ist dies dargestellt an dem Pflugkörperhalteteil 7. Das Pflugkörperhalteteil 7 ist mit Pflugrahmen 2 verbunden. Das Ansatzelement 29, das dem Ansatzelement 17 der Fig. 6 und 8 entsprechen soll, hat ein Buchsenteil 29.1, das ein Innengewinde aufweist, in das ein Schraubelement 30 mit einem Konusende 30.1 eingeschraubt ist, mit einem Fixierkonus 31 und einer Mutter 32. Somit ist das Schraubelement 30 lageveränderlich in der Ausnehmung 33 des Pflugrahmens gehalten, so dass der Vorsprung 29 bzw. 17 den individuellen Fertigungs- und Montageanforderungen durch eine Lageveränderung des Vorsprunges 30 individuell angepasst werden kann. So ist auch eine Vormontage und auch eine Endsicherung des Vorsprunges 17 bzw. 29 ermöglicht.

Die Halterung des Stützrades 3 ist ebenfalls nur an einer oder nur anden beiden Seitenwandungen des Pflugrahmens 2 befestigt.

## Patentansprüche

1. Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4, 5) mit Pflugkörpern (6), wobei durch eine über eine Antriebsvorrichtung eingeleitete Drehbewegung des Pflugrahmens (2) wahlweise die eine oder die andere Pflugscharreihe (4, 5) in ihre Betriebsstellung oder in ihre Außerbetriebsstellung überführbar ist und wobei Pflugkörper (6), Stützräder, Anbaubock (23) und/oder dergleichen Pflugfunktionsteile über Halterungen (7) an dem Pflugrahmen (2) befestigt sind, wobei die Halterungen (7, 24) von Funktionsteilen mit einer Seitenwand oder mit zwei Seitenwänden des Pflugrahmens (2) verschraubt sind, und wobei die Halterungen (7, 24) von Funktionsteilen (4, 5, 6, 23) des Pflugrahmens (2) nur an einer Seitenwand oder an zwei Seitenwänden des Pflugrahmens (2) befestigt sind, **dadurch gekennzeichnet, dass** die an einer Seitenwand oder an Seitenwänden des als Vierkantrahmen ausgebildeten Pflugrahmens (2) in der Arbeitsstellung des Pfluges angrenzenden, zum Erdboden hin weisende und vom Erdboden weg weisende Wandungsbereiche des Pflugrahmens (2) frei von Halterungen (7, 24) von Funktionsteilen ausgebildet sind.

2. Drehpflug nach Anspruch 1, **dadurch gekennzeichnet, dass** die Halterungen (7, 24) von Funktionsteilen und/oder der Pflugrahmen (2) zumindest ein Ansatzelement (17) aufweist, das formschlüssig in eine komplementär ausgebildete Ausnehmung des Pflugrahmens (2) bzw. der Halterung (7, 23) eingreift.

3. Drehpflug nach einem der Ansprüche 1 bis 2, **dadurch gekennzeichnet, dass** zumindest zwei mit Abstand zueinander vorgesehene Ansatzelemente (17) an der Halterung (7, 23) und/oder an dem Pflugrahmen (2) vorgesehen sind, die in den Ansatzelementen (17) zugeordnete Ausnehmungen an dem Pflugrahmen (2) und/oder an der Halterung (7, 23) formschlüssig eingreifen.

4. Drehpflug nach Anspruch 2 oder 3, **dadurch gekennzeichnet, dass** das zumindest ein Ansatzelement (17) und die diesem zugeordnete Ausnehmung ein Widerlager für die Halterung (7, 23) ausbildet und zusätzlich zu dem Widerlager ein in den Pflugrahmen (2) eingreifendes Befestigungselement (16) vorgesehen ist.

5. Drehpflug nach Anspruch 4, **dadurch** gekenntzeichnet, dass das zusätzlich zum Ansatzelement (17) vorgesehene Befestigungselement (16) durch eine Schraubverbindung gebildet wird.

6. Drehpflug nach einem der Ansprüche 1 bis 5 mit einer Vorrichtung zur Einstellung der Pflugarbeitsbreite in den jeweiligen Arbeitsstellungen, wobei die Pflugkörper (6) zur Einstellung der Pflugarbeitsbreite um eine im Wesentlichen lotrechte Achse schwenkbar am Pflugrahmen (2) und jeweils über einen eine Ausnehmung (14) des Pflugrahmens (2) durchsetzenden Hebel (13) verstellbar sind, **dadurch gekennzeichnet, dass** der die Ausnehmung (14) des Pflugrahmens (2) durchsetzende Hebel (13) beweglich mit zumindest einem Teil (10.1, 10.2) der Halterung (7) verbunden ist.

7. Drehpflug nach Anspruch 6, **dadurch gekennzeichnet, dass** der Hebel um eine in der Arbeitsstellung des Pflugkörpers (6) im Wesentlichen horizontal ausgerichtete Achse (21) schwenkbar mit zumindest einem Teil (10.1, 10.2) der Halterung (7) verbunden ist.

8. Drehpflug nach der Anspruch 6, **dadurch gekennzeichnet, dass** der die Ausnehmung (14) des Pflugrahmens (2) durchsetzende Hebel (13) um eine Achse (21) schwenkbar ist, die parallel oder annähernd parallel zu einer Seitenwandung des Pflugrahmens (2) ausgerichtet ist.

9. Drehpflug nach einem der Ansprüche 6 bis 8, **dadurch gekennzeichnet, dass** der Hebel (13) über einen die Achse (21) zwischen dem Hebel (13) und der Funktionsteilhalterung (7) aufweisenden Gelenkbolzen (20) mit der Halterung (7) verbunden ist.

10. Drehpflug nach einem der Ansprüche 6 bis 9, **dadurch gekennzeichnet, dass** die Ausnehmung (14) innerhalb des Pflugrahmens (2) zur Anordnung des Hebels (13) eine die Bewegung des Hebels (13) um die in etwa horizontal ausgerichtete Achse (21) zulassende Hocherstreckung aufweist.

11. Drehpflug nach einem der Ansprüche 1 bis 10, **dadurch gekennzeichnet, dass** der die Ausnehmung (14) durchsetzende Hebel (13) mitsamt der Schwenkachse (21) derart mit der Halterung (7) verbunden ist, dass die Achse (21) bei Einstellung der Pflugarbeitsbreite in der jeweiligen Arbeitsstellung eine Schwenkbewegung zumindest eines Teils der Halterung (7) um die lotrechte Achse mitmacht.

12. Drehpflug nach einem der Ansprüche 6 bis 11, **dadurch gekennzeichnet, dass** die Halterung (7) zwei mit Abstand zueinander angeordnete Konsolen (10.1, 10.2) aufweist, zwischen denen eine Hülse (12) mit Gelenkbolzen vorgesehen ist, die die lotrechte Achse zur Einstellung der Arbeitsbreite ausbilden, wobei ein Befestigungsteil (22) mit der Hülse (12) verbunden ist, an denen der Hebel (13) mit der im Wesentlichen horizontal ausgerichteten Achse (21) angreift.

13. Drehpflug nach Anspruch 12, **dadurch gekennzeichnet, dass** an den beiden mit Abstand zueinander angeordneten Konsolen (10.1, 10.2) der Halterung (7) abgestützt ist.

14. Drehpflug nach Anspruch 13, **dadurch gekennzeichnet, dass** die beiden mit Abstand zueinander angeordneten Konsolen (10.1, 10.2) an einem Halteteil (9) befestigt sind, das mit dem Pflugrahmen (2) verbunden ist.

15. Drehpflug nach Anspruch 14, **dadurch gekennzeichnet, dass** das Halteteil (9) einen Befestigungsansatz (18) aufweist, der in die Ausnehmung (14) des Pflugrahmens eingreift.

16. Drehpflug nach Anspruch 15, **dadurch gekennzeichnet, dass** das Halteteil (9) zwischen den beiden mit Abstand zueinander angeordneten Konsolen (10.1, 10.2) endseitige Halteschenkel aufweist und mit den beiden Konsolen (10,1, 10.2) verschraubt ist.

17. Drehpflug nach einem der Ansprüche 6 bis 16, **dadurch gekennzeichnet, dass** die Halterung (7, 23) oder ein Teil (9) der Halterung (7) eine mit der Ausnehmung (14) des Pflugrahmens (2) im wesentlichen kongruierende Ausnehmung (15) aufweist zur Aufnahme des Hebels (13).

18. Drehpflug nach einem der Ansprüche 1 bis 17, **dadurch gekennzeichnet, dass** die Halterung ein Stützrad (3) des Pfluges trägt.

## Claims

1. Reversible plough (1), having a plough frame (2) which for connecting the reversible plough (1) to an agricultural tractor is rotatably and/or pivotably fastenable to an attachment block, and having ploughshare rows (4, 5), arranged on opposite sides of the plough frame (2), with plough bodies (6), wherein by way of a rotation movement of the plough frame (2), induced by way of a drive device, the one or the other ploughshare row as desired (4, 5) is transformable into its operating position or into its nonoperating position, and wherein plough bodies (6), support wheels, mounting block (23) and/or similar functional plough parts are fastened to the plough frame (2) by way of mounts (7), wherein the mounts (7, 24) of functional parts are screwed to one side wall or to two side walls of the plough frame (2), and wherein the mounts (7, 24) of functional parts (4, 5, 6, 23) of the plough frame (2) are fastened only to one side wall or to two side walls of the plough frame (2), **characterized in that** the wall regions of the plough frame (2) being configured as a square-cut frame, which in the operating position of the plough adjoin one side wall or side walls and point towards the soil and point away from the soil, are configured so as to be free of mounts (7, 24) of functional parts.

2. Reversible plough according to Claim 1, **characterized in that** the mounts (7, 24) of functional parts, and/or the plough frame (2), have/has at least one appendage element (17) which engages in a form-fitting manner into a clearance of the plough frame (2), or of the mount (7, 23), respectively, which is configured so as to be complementary.

3. Reversible plough according to one of Claims 1 to 2, **characterized in that** at least two appendage elements (17), which are provided so as to be mutually spaced apart and which engage in a form-fitting manner into clearances on the plough frame (2) and/or on the mount (7, 23) that are assigned to the appendage elements (17), are provided on the mount (7, 23) and/or on the plough frame (2).

4. Reversible plough according to Claim 2 or 3, **characterized in that** at least one appendage element (17) and the clearance assigned thereto configure a counter-bearing for the mount (7, 23), and a fastening element (16) which engages into the plough frame (2) is additionally provided on the counter-bearing.

5. Reversible plough according to Claim 4, **characterized in that** the fastening element (16) which is provided in addition to the appendage element (17) is formed by a screw connection.

6. Reversible plough according to one of Claims 1 to 5, having a device for adjusting the plough operating width in the respective operational positions, wherein for adjusting the plough operating width the plough bodies (6) on the plough frame (2) are pivotable about a substantially vertical axis and in each case adjustable by a lever (13) which engages through a clearance (14) of the plough frame (2), **characterized in that** the lever (13) which engages through the clearance (14) of the plough frame (2) is movably connected to at least one part (10.1, 10.2) of the mount (7).

7. Reversible plough according to Claim 6, **characterized in that** the lever is connected to at least one part (10.1, 10.2) of the mount (7) so as to be pivotable about an axis (21) which in the operational position of the plough body (6) is oriented in a substantially horizontal manner.

8. Reversible plough according to Claim 6, **characterized in that** the lever (13) which engages through the clearance (14) of the plough frame (2) is pivotable about an axis (21) which is oriented so as to be parallel or almost parallel with a side wall of the plough frame (2).

9. Reversible plough according to one of Claims 6 to 8, **characterized in that** the lever (13) is connected to the mount (7) by way of a fulcrum pin (20) which has the axle (21) between the lever (13) and the function-part mount (7).

10. Reversible plough according to one of Claims 6 to 9, **characterized in that** for disposing the lever (13) the clearance (14) within the plough frame (2) has a vertical extent which permits movement of the lever (13) about the axle (21) which is oriented so as to be approximately horizontal.

11. Reversible plough according to one of Claims 1 to 10, **characterized in that** the lever (13) which engages through the clearance (14) together with the pivot axle (21) is connected to the mount (7) in such a manner that the axle (21) during adjustment of the plough operating width in the respective operating position participates in a pivot movement of at least part of the mount (7) about the vertical axis.

12. Reversible plough according to one of Claims 6 to 11, **characterized in that** the mount (7) has two consoles (10.1, 10.2) which are disposed so as to be mutually spaced apart and between which a sleeve (12) having a fulcrum pin which configures the vertical axis for adjustment of the operating width is provided, wherein a fastening part (22) is connected to the sleeve (12), the lever (13) engaging thereon by way of the axle (21) which is oriented so as to be substantially horizontal.

13. Reversible plough according to Claim 12, **characterized in that** the mount (7) is supported on the two mutually spaced apart consoles (10.1, 10.2).

14. Reversible plough according to Claim 13, **characterized in that** the two mutually spaced apart consoles (10.1, 10.2) are fastened to a retaining part (9) which is connected to the plough frame (2).

15. Reversible plough according to Claim 14, **characterized in that** the retaining part (9) has a fastening appendage (18) which engages into the clearance (14) of the plough frame.

16. Reversible plough according to Claim 15, **characterized in that** the retaining part (9) between the two mutually spaced apart consoles (10.1, 10.2) has end-side retaining legs and is screwed to the two consoles (10.1, 10.2).

17. Reversible plough according to one of Claims 6 to 16, **characterized in that** for receiving the lever (13) the mount (7, 23), or a part (9) of the mount (7), has a clearance (15) which is substantially congruent with the clearance (14) of the plough frame (2).

18. Reversible plough according to one of Claims 1 to 17, **characterized in that** the mount carries a support wheel (3) of the plough.

## Revendications

1. Charrue barbant (1) équipée d'un châssis de charrue (2) pouvant être fixé de façon pivotante et/ou basculante à un support en saillie en vue de réaliser la jonction de la charrue barbant (1) à un tracteur agricole et avec des rangées de soc de charrue (4, 5) équipées de corps de charrue (6) et disposées sur les côtés opposés du châssis de charrue (2), la première ou l'autre rangée de soc de charrue (4, 5) pouvant être transférées au choix dans leur position de fonctionnement ou dans leur position hors fonctionnement par un mouvement de rotation du châssis de charrue (2) introduit par un dispositif d'entraînement et les corps de charrue (6), les roues de soutien, le support en saillie (23) et/ou autres parties fonctionnelles de charrue étant fixés au châssis de charrue (2) via les fixations (7), les fixations (7, 24) étant visées à partir des pièces fonctionnelles à une paroi latérale ou à deux parois latérales du châssis de charrue (2) et les fixations (7, 24) des pièces fonctionnelles (4, 5, 6, 23) du châssis de charrue (2) n'étant fixées qu'à une paroi latérale ou à deux parois latérales du châssis de charrue (2), **caractérisée en ce que** les zones de paroi du châssis de charrue (2) connexes à une paroi latérale ou aux parois latérales du châssis de charrue (2), réalisé par une châssis à quatre côtés, dans la position de travail de la charrue, orientées en direction du plancher et s'écartant du plancher étant réalisées sans fixations (7, 24) à partir des pièces fonctionnelles.

2. Charrue barbant selon la revendication 1, **caractérisée en ce que** les fixations (7, 24) à partir des pièces fonctionnelles et/ou du châssis de charrue (2) comportent au moins un élément d'appendice (17) s'engrenant par complémentarité de formes dans un évidement, réalisé de façon complémentaire, du châssis de charrue (2) et/ou de la fixation (7, 23).

3. Charrue barbant selon l'une quelconque des revendications 1 à 2, **caractérisée en ce qu'**au moins deux éléments d'appendice (17) prévus à une certaine distance l'un de l'autre sont prévus au niveau de la fixation (7, 23) et/ou au niveau du châssis de charrue (2), lesdits éléments s'engrenant par complémentarité de formes dans les évidements associés aux éléments d'appendice (17) au niveau du châssis de charrue (2) et/ou au niveau de la fixation (7, 23).

4. Charrue barbant selon la revendication 2 ou 3, **caractérisée en ce que** l'au moins un élément d'appendice (17) et l'évidement lui étant associé forment un contre-palier pour la fixation (7, 23) et qu'un élément de fixation (16) s'engrenant dans le châssis de charrue (2) est prévu en sus du contrepalier.

5. Charrue barbant selon la revendication 4, **caractérisée en ce que** l'élément de fixation (16) prévu en sus de l'élément d'appendice (17) est formé par une liaison vissée.

6. Charrue barbant selon l'une quelconque des revendications 1 à 5 avec un dispositif de réglage de la largeur de travail de charrue dans les positions de travail respectives, les corps de charrue (6) étant réglables au niveau du châssis de charrue (2) de façon à pouvoir basculer autour d'un axe pour l'essentiel d'aplomb pour régler la largeur de travail de charrue et respectivement via un levier (13) traversant un évidement (14) du châssis de charrue (2), **caractérisée en ce que** le levier (13) traversant l'évidement (14) du châssis de charrue (2) est relié de façon mobile à au moins une pièce (10.1, 10.2) de la fixation (7).

7. Charrue barbant selon la revendication 6, **caractérisée en ce que** le levier est relié à au moins une pièce (10.1, 10.2) de la fixation (7) de façon à pouvoir basculer autour d'un axe (21) orienté pour l'essentiel horizontalement dans la position de travail du corps de charrue (6).

8. Charrue barbant selon la revendication 6, **caractérisée en ce que** le levier (13) traversant l'évidement (14) du châssis de charrue (2) peut pivoter autour d'un axe (21) orienté parallèlement ou approximativement parallèlement à une paroi latérale du châssis de charrue (2).

9. Charrue barbant selon l'une quelconque des revendications 6 à 8, **caractérisée en ce que** le levier (13) est relié à la fixation (7) via un goujon articulé (20) comportant l'axe (21) entre le levier (13) et la fixation de pièce de fonctionnelle (7).

10. Charrue barbant selon l'une quelconque des revendications 6 à 9, **caractérisée en ce que** l'évidement (14) comporte à l'intérieur du châssis de charrue (2) en direction de l'agencement du levier (13) une extension en hauteur permettant le mouvement du levier (13) autour de l'axe (21) orienté approximativement horizontalement.

11. Charrue barbant selon l'une quelconque des revendications 1 à 10, **caractérisée en ce que** le levier (13) traversant l'évidement (14) est relié de telle sorte, conjointement avec l'axe de basculement (21), à la fixation (7) que l'axe (21) accompagne, lors du réglage de la largeur de travail de charrue dans la position de travail respective, un mouvement de basculement d'au moins une partie de la fixation (7) autour de l'axe d'aplomb.

12. Charrue barbant selon l'une quelconque des revendications 6 à 11, **caractérisée en ce que** la fixation (7) comporte deux consoles (10.1, 10.2) disposées à une certaine distance l'une de l'autre entre lesquelles un fourreau (12) pourvu d'un goujon articulé est prévu formant l'axe d'aplomb pour régler la largeur de travail, une pièce de fixation (22) étant reliée au fourreau (12) au niveau duquel le levier (13) engrène l'axe (21) orienté pour l'essentiel horizontalement.

13. Charrue barbant selon la revendication 12, **caractérisée en ce que** la fixation (7) est maintenue au niveau des deux consoles (10.1, 10.2) disposées à une certaine distance l'une de l'autre.

14. Charrue barbant selon la revendication 13, **caractérisée en ce que** les deux consoles (10.1, 10.2) disposées à une certaine distance l'une de l'autre sont fixées à une pièce d'arrêt (9) reliée au châssis de charrue (2).

15. Charrue barbant selon la revendication 14, **caractérisée en ce que** la pièce d'arrêt (9) comporte un appendice de fixation (18) s'engrenant dans l'évidement (14) du châssis de charrue.

16. Charrue barbant selon la revendication 15, **caractérisée en ce que** la pièce d'arrêt (9) comporte des arêtes d'arrêt disposées du côté d'extrémité, entre les deux consoles (10.1, 10.2) disposées à une certaine distance l'une de l'autre, et qu'elle est vissée aux deux consoles (10,1, 10.2).

17. Charrue barbant selon l'une quelconque des revendications 6 à 16, **caractérisée en ce que** la fixation (7, 23) ou une partie (9) de la fixation (7) comporte un évidement (15) pour l'essentiel congru avec l'évidement (14) du châssis de charrue (2) pour loger le levier (13).

18. Charrue barbant selon l'une quelconque des revendications 1 à 17, **caractérisée en ce que** la fixation supporte une roue de maintien (3) de la charrue.
